# EUROPÄISCHE PATENTSCHRIFT

(11) **EP 2 310 784 B1**
(45) Veröffentlichungstag und Bekanntmachung des Hinweises auf die Patenterteilung: **18.12.2013**
(21) Anmeldenummer: 08786689.3
(22) Anmeldetag: 31.07.2008
(51) Int. Cl.: F27B 9/14, F27B 1/00, C04B 35/532

(54) **SCHACHTOFEN UND VERFAHREN ZUR WÄRMEBEHANDLUNG VON KOHLENSTOFFHALTIGEN FORMKÖRPERN**
SHAFT FURNACE AND METHOD FOR HEAT TREATING CARBONACEOUS CASTINGS
FOUR À CUVES ET PROCÉDÉ DE TRAITEMENT THERMIQUE DE CORPS MOULÉS CARBONÉS

(43) Veröffentlichungstag der Anmeldung: 20.04.2011
(73) Patentinhaber: Leisenberg, Wolfgang, 61231 Bad Nauheim / Steinfurth (DE)
(72) Erfinder: Leisenberg, Wolfgang, 61231 Bad Nauheim / Steinfurth (DE)
(74) Vertreter: Tappe, Hartmut
(86) Internationale Anmeldenummer: PCT/EP2008/060064
(87) Internationale Veröffentlichungsnummer: WO 2010/012307

(56) Entgegenhaltungen:
- EP-A- 1 742 003
- WO-A-99/06779

## Beschreibung

Die vorliegende Erfindung betrifft einen Schachtofen zur Wärmebehandlung von kohlenstoffhaltigen Formkörpern, insbesondere Anoden, mit einer Anordnung der Formkörper in zumindest einer zwischen Temperierschachteinrichtungen angeordneten Formkörpersäule, die in einem Förderschacht eine Mehrzahl von übereinander angeordneten Formkörperreihen aufweist, welche ausgehend von einem Eingangstemperaturfeld hin zu einem Ausgangstemperaturfeld an einer Mehrzahl von Temperaturfeldern der Temperierschachteinrichtungen vorbei bewegt werden und eine Aufheizzone, eine mit einer Brennereinrichtung versehene Feuerzone und eine Abkühlzone durchlaufen, nach Anspruch 1 oder 6. Des Weiteren betrifft die Erfindung ein Verfahren zur Wärmebehandlung von kohlenstoffhaltigen Formkörpern, insbesondere Anoden, gemäß dem Oberbegriff des Anspruchs 8.

Aus der WO 99/06779 ist ein Schachtofen zur kontinuierlichen Wärmebehandlung von als Anoden ausgebildeten kohlenstoffhaltigen Formkörpern in einer Säulenanordnung bekannt, bei dem die Anoden vermittels einer Fördereinrichtung zwischen Temperierschachteinrichtungen durch eine Aufheizzone, eine Feuerzone und eine Kühlzone einer Ofeneinrichtung gefördert werden. Bei dem bekannten Verfahren sind die Formkörper in übereinander angeordneten Formkörperreihen angeordnet und werden in einem Förderschacht zwischen Heizschachteinrichtungen ausgehend von einer Bestückungsstation bis hin zu einer Entnahmestation hindurchgeführt. Dabei bilden die übereinander angeordneten Formkörperreihen insgesamt eine Formkörpersäule.

Aufgrund der Ausbildung lediglich einer Formkörpersäule ist beidseitig der einen Formkörpersäule jeweils eine Temperierschachteinrichtung vorgesehen. Weiterhin ist durch die Ausbildung lediglich einer Formkörpersäule die Produktionsleistung der Ofeneinrichtung durch die Höhe der Formkörpersäule begrenzt. Basierend auf dem bekannten Verfahren bzw. der zur Durchführung des Verfahrens eingesetzten, bekannten Vorrichtung ist daher eine Steigerung der Produktionsleistung nur möglich durch eine entsprechende Vervielfachung der gesamten Ofeneinrichtung, woraus sich ein entsprechender Raumbedarf für die Installation einer in der Produktionsleistung gesteigerten Gesamtanlage ergibt.

Dabei wird der Raumbedarf für die Unterbringung einer Mehrzahl der bekannten Ofeneinrichtungen noch dadurch vergrößert, dass bei der bekannten Ofeneinrichtung Brennereinrichtungen, die in der Feuerzone der Ofeneinrichtung angeordnet sind, jeweils quer zu den beiden sich in Längsrichtung der Formkörperreihen erstreckenden Temperierschachteinrichtungen angeordnet sind und entsprechend seitlich abstehen. Hierdurch wird die Breite der gesamten Ofeneinrichtung also wesentlich von den seitlich angeordneten Brennereinrichtungen sowie mit den Brennereinrichtungen verbundenen Versorgungs- und Anschlussleitungen bestimmt.

Ebenso wie die kontinuierliche Förderung der Formkörperreihen zwischen den Temperierschachteinrichtungen fördert die seitliche Anordnung der Brennereinrichtungen durch Ausbildung so genannter "Hot Spots" eine ungleichmäßige Temperaturverteilung in den Formkörpern, mit der Folge, dass sich in den Formkörpern ein ungleichmäßiges Gefüge ausbildet mit den entsprechenden nachteiligen Auswirkungen, die sich im Falle der Ausbildung der Formkörper als Anoden insbesondere in einem ungleichmäßigen Elektrodenabbrand bemerkbar machen.

Der vorliegenden Erfindung liegt die Aufgabe zugrunde, einen Schachtofen bzw. ein Verfahren zur Wärmebehandlung von kohlenstoffhaltigen Formkörpern in einem Schachtofen vorzuschlagen, der bzw. das eine möglichst gleichmäßige, der Ausbildung eines Temperaturgradienten entgegen wirkende Temperaturbeaufschlagung der Formkörper ermöglicht.

Zur Lösung dieser Aufgabe weist 6 der erfindungsgemäße Schachtofen die Merkmale des Anspruchs 1 oder 6 auf.

Gemäß einer ersten erfindungsgemäßen Lösung sind sowohl zwischen den Temperaturfeldern der Temperierschachteinrichtungen als auch zwischen den Formkörperreihen der Formkörpersäule thermisch isolierende Zwischenlagen ausgebildet. Einerseits wird hierdurch der Ausbildung eines Temperaturgradienten in einem Temperaturfeld entgegengewirkt. Andererseits wird der Ausbildung eines Temperaturgradienten in den Formkörpern durch Wärmeleitung zwischen den Formkörperreihen entgegen gewirkt.

Weiterhin trägt zur Ausbildung eines möglichst geringen Temperaturgradienten, insbesondere in Längsrichtung der Formkörperreihen, bei, wenn die Temperaturfelder der Temperierschachteinrichtung in Längsrichtung der Formkörperreihen verlaufende Heizkanäle aufweisen, die an ihren Enden zur Ausbildung einer serpentinenartigen Kanalanordnung über Umlenkeinrichtungen miteinander verbunden sind. Hierdurch ist sichergestellt, dass die Gasströmung in Längsrichtung der Formkörperreihen zwangsgeführt wird.

Besonders vorteilhaft zur Ausbildung eines möglichst geringen Temperaturgradienten innerhalb eines Temperaturfeldes ist es auch, wenn in den Heizkanälen eines Temperaturfeldes zumindest eine den Volumenstrom in einem stromaufwärts gelegenen Temperaturfeldbereich reduzierende Drosseleinrichtung vorgesehen ist, so dass die unmittelbare Einleitung eines Teilvolumenstroms in stromabwärts gelegene Bereiche der Kanalanordnung möglich ist.

Eine derartige Drosseleinrichtung kann besonders vorteilhaft realisiert werden, wenn im Strömungseingangsbereich eines Temperaturfeldes eine zwei benachbarte Kanäle unmittelbar miteinander verbindende Bypass-Einrichtung vorgesehen ist.

Zur Beeinflussung eines Temperaturgradienten ist es auch vorteilhaft, wenn die Kanäle einen räumlich verwinkelten Verlauf aufweisen, derart, dass die Kanäle aus einem stromaufwärts gelegenen Temperaturfeldbereich anteilig in einem stromabwärts gelegenen Temperaturfeldbereich verlaufen und umgekehrt.

Gemäß einer alternativen erfindungsgemäßen Lösung weist der Schachtofen zur gleichzeitigen Wärmebehandlung einer Mehrzahl von Formkörpersäulen zumindest zwei Förderschächte auf, zwischen denen eine Temperierschachteinrichtung zur Beheizung der mit in den Förderschächten geförderten Formkörpersäulen angeordnet ist, wobei die in der Feuerzone angeordneten Temperaturfelder der Temperierschachteinrichtungen mit Brennern versehen sind, die so angeordnet sind, dass eine Temperaturbeaufschlagung der Temperaturfelder tangential zu den Formkörperreihen erfolgt.

Durch die tangentiale Ausrichtung der Brenner wird eine im Vergleich zu der bekannten quergerichteten Beaufschlagung große Formkörperfläche mit Temperatur beaufschlagt. Die Ausbildung eines Hot Spots unterbleibt. Durch die sandwichartige Anordnung der Temperierschachteinrichtung wird eine gleichzeitige und gleichmäßige Temperaturbeaufschlagung von zwei seitlich in Förderschächten angeordneten Formkörpersäulen ohne tangentiale Abstrahlungsverluste möglich, so dass eine tangentiale Temperaturbeaufschlagung betriebswirtschaftlich attraktiv ist.

Der erfindungsgemäße Aufbau des Schachtofens ermöglicht darüber hinaus eine zueinander parallele Anordnung einer Mehrzahl von Formkörpersäulen, wobei jeweils zwei benachbarte Formkörpersäulen durch eine beiden Formkörpersäulen zugeordnete Temperierschachteinrichtung temperiert werden. Dabei ermöglicht die Anordnung der Brenner der Brennereinrichtung in der Feuerzone mit einer tangentialen Beaufschlagung der Formkörperreihen, dass jeweils ein Brenner zur Temperierung zweier benachbarter Formkörpersäulen bzw. Formkörperreihen dient, ohne dass die Brennereinrichtung die parallele "Schichtanordnung" der Formkörpersäulen stören würde.

Insgesamt lässt sich somit basierend auf dem erfindungsgemäßen Aufbau des Schachtofens eine erhebliche Steigerung der Produktionsleistung bei einer relativ geringen Erhöhung des Raumbedarfs realisieren. Im Vergleich zu einem konventionellen Schachtofen gemäß der WO 99/06779 lässt sich bei einem erfindungsgemäß aufgebauten Schachtofen eine Verdoppelung der Produktionsleistung bei einer Vergrößerung des Raumbedarfs um lediglich etwa 50 % realisieren.

Wenn gemäß einer vorteilhaften Ausführungsform des Schachtofens die Brenner derart angeordnet sind, dass die Temperaturbeaufschlagung der Temperaturfelder in Längsrichtung der Temperaturfelder erfolgt, ist die Ausbildung einer entsprechend ausgerichteten Längsströmung des Rauchgases in den Temperaturfeldern möglich, so dass eine bezogen auf die Länge der jeweiligen Formkörperreihe maximierte Reichweite in der Rauchgasströmung erreicht wird.

Des erfindungsgemäße Verfahren zur Wärmebe-handlung von Anoden weist die Merkmale des Anspruchs 8 auf.

Hierbei erfolgt erfindungsgemäß die Wärmebehandlung der kohlenstoffhaltigen Formkörper in zumindest zwei Formkörpersäulen gleichzeitig, derart, dass eine zwei Formkörpersäulen voneinander trennende Temperierschachteinrichtung zur Temperaturbeaufschlagung beider Formkörpersäulen dient, wobei im Bereich der Feuerzone angeordnete Temperaturfelder der Temperierschachteinrichtungen mit Brennern der Brennereinrichtung derart beaufschlagt werden, dass sich eine im Wesentlichen parallel zu den Formkörperreihen ausgebildete Rauchgasströmung einstellt.

Besonders vorteilhaft ist es, wenn die Rauchgasströmung in Längsrichtung der Temperaturfelder ausgebildet wird.

Bevorzugt wird in den Temperaturfeldern der Heizschachteinrichtungen eine in Längsrichtung der Anodenreihen verlaufende, serpentinenartige Gasströmung ausgebildet, um der Ausbildung eines Temperaturgradienten insbesondere in Längsrichtung der Formkörperreihen entgegenzuwirken.

Nachfolgend wird eine bevorzugte Ausführungsform eines Schachtofens sowie eine vorteilhafte Variante des Verfahrens zur kontinuierlichen Wärmebehandlung von hier als Anoden ausgebildeten kohlenstoffhaltigen Formkörpern anhand der Zeichnung näher erläutert.

Es zeigen:
- **Fig. 1**: einen Schachtofen zur Herstellung von in einer Mehrzahl von Anodensäulen angeordneten Anoden in perspektivi-scher Darstellung;
- **Fig. 2**: eine Schnittdarstellung des in **Fig. 1** dargestellten Schachtofens gemäß Schnittlinienverlauf II-II in **Fig. 1**;
- **Fig. 3**: eine Draufsicht auf den in **Fig. 1** dargestellten Schacht-ofen;
- **Fig. 4**: eine Schnittdarstellung durch den in **Fig. 1** dargestellten Schachtofen gemäß Schnittlinienverlauf IV-IV in **Fig. 1**;
- **Fig. 5**: eine Schnittdarstellung durch eine in **Fig. 4** dargestellte Absaugkanaleinrichtung;
- **Fig. 6**: eine Teilschnittdarstellung des in **Fig. 1** dargestellten Schachtofens gemäß Schnittlinienverlauf VI-VI in **Fig. 1**;
- **Fig. 7**: ein Temperaturprofil einer Heizschachteinrichtung des in **Fig. 1** dargestellten Schachtofens in Tabellenform.

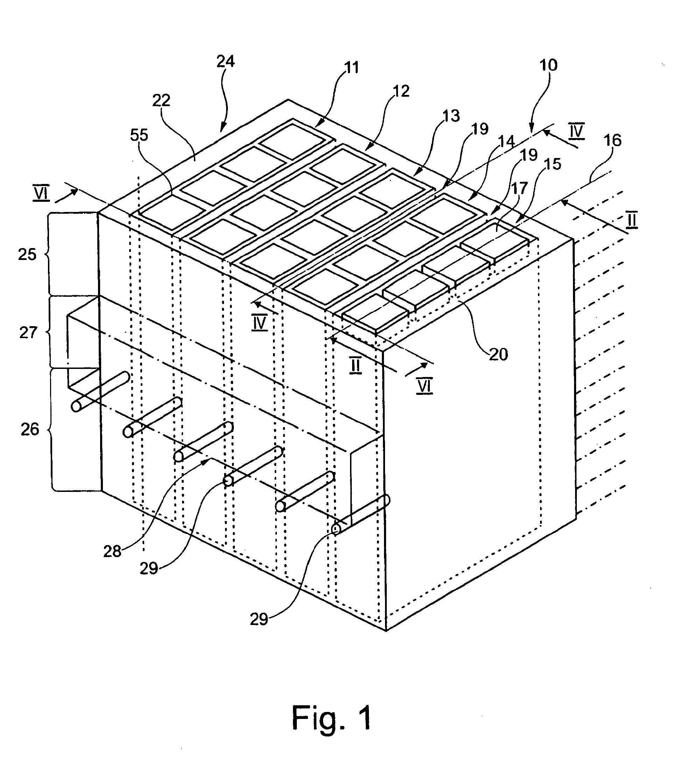

**Fig. 1** zeigt einen Schachtofen 10 mit einer Mehrzahl von als Anodensäulen 11, 12, 13, 14, 15 ausgebildeten Formkörpersäulen, die jeweils übereinander liegend angeordnet als Anodenreihen 16 ausgebildete Formkörperreihen mit jeweils vier in einer Reihe angeordneten als Anoden 17 ausgebildete Formkörper aufweisen.

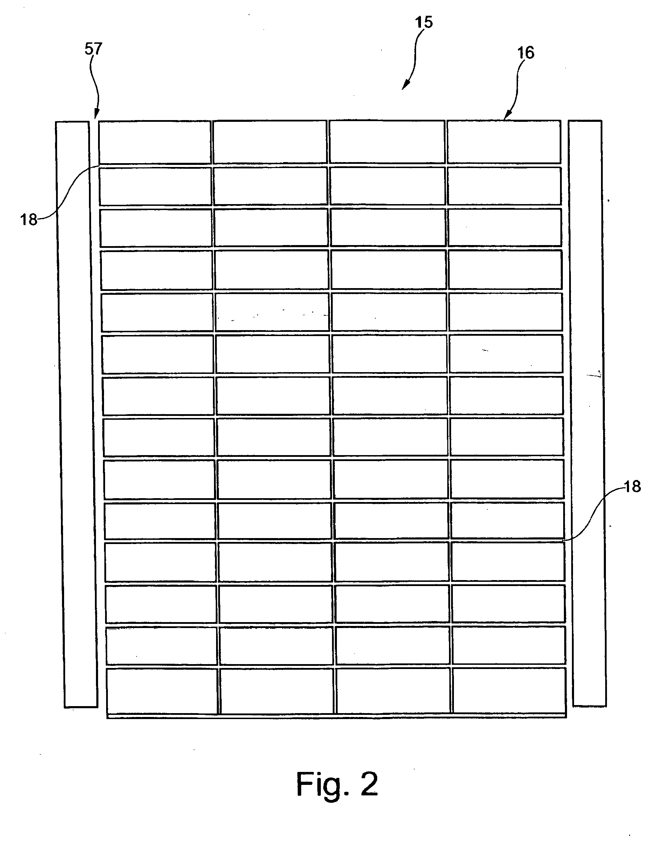

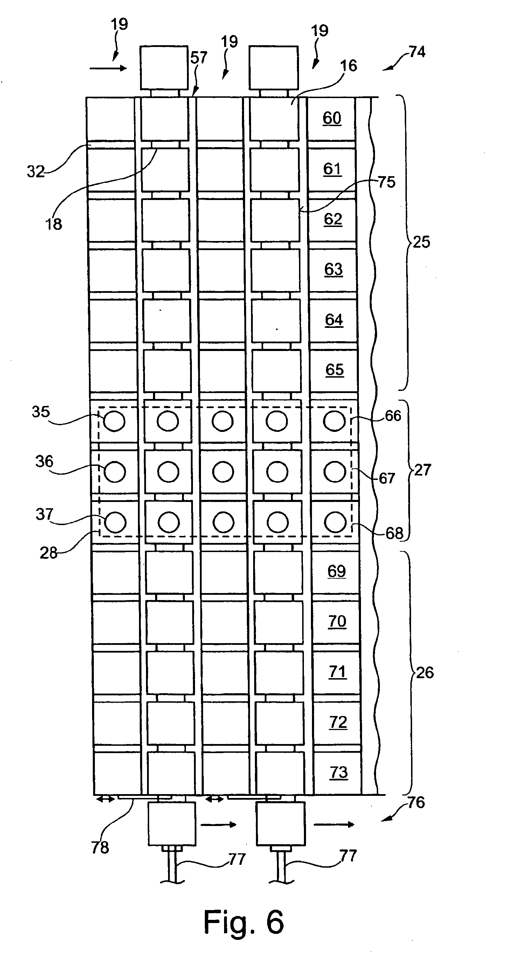

Bei dem in **Fig. 1** dargestellten Ausführungsbeispiel sind insgesamt 14 Anodenreihen übereinander liegend angeordnet, von denen aus Gründen einer übersichtlichen Darstellung jeweils nur die oberste Anodenreihe 16 dargestellt ist. **Fig. 2** zeigt die Anodensäule 15 in einer Schnittdarstellung mit den vierzehn übereinander liegend angeordneten Anodenreihen 16, die jeweils über eine thermisch isolierende Zwischenlage 18 in vertikaler Richtung voneinander getrennt sind. Die Zwischenlage 18 ist vorzugsweise als feuerfeste Isolierschicht aus Leichtschamotte ausgeführt. Die Zwischenlage kann als Schicht oder aus einzelnen Formstücken, wie bspw. Feuerleichtsteine, ausgebildet sein. Die Schicht kann als wieder verwendbare Schicht bei der Anordnung der Anordnung der Anodenreihen 16 in einem Förderschacht 57 (**Fig. 6**) jeweils auf die oberste Anodenreihe 16 aufgelegt werden.

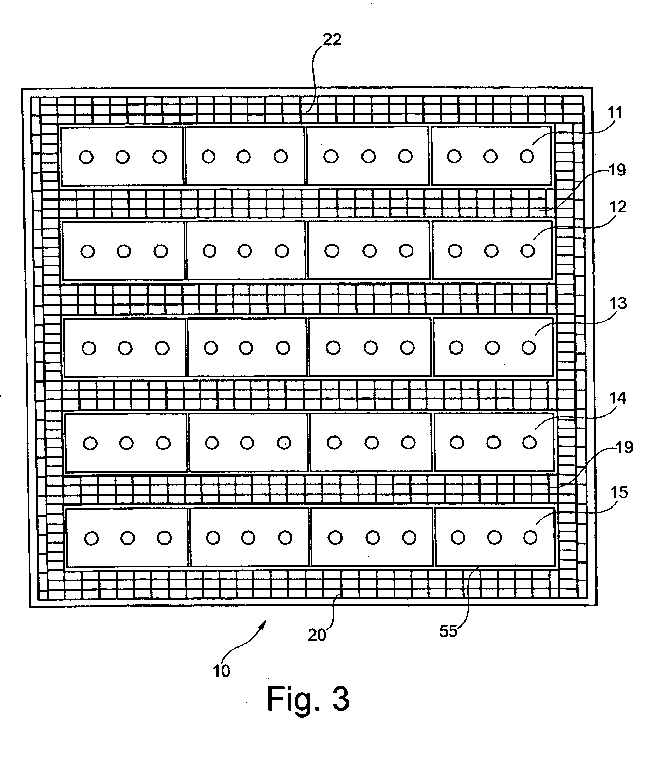

Zwischen den Anodensäulen 11 bis 15 des in **Fig. 1** dargestellten Schachtofens 10 ist jeweils eine Temperierschachteinrichtung 19 angeordnet, die mit weiteren äußeren Temperierschachteinrichtungen 20, 22 ein in **Fig. 3** dargestelltes Temperierschachtsystem 24 bilden. Die jeweils zwischen zwei Anodensäulen 11 und 12, 12 und 13, 13 und 14 sowie 14 und 15 angeordneten Temperierschachteinrichtungen 19 sowie die beiden zu den Temperierschachteinrichtungen 19 parallelen äußeren Temperierschachteinrichtungen 20 und 22 sind in einer zwischen einer Aufheizzone 25 und einer Abkühlzone 26 angeordneten Feuerzone 27 mit einer Brennereinrichtung 28 versehen, die jeweils den Temperierschachteinrichtungen 19, 20 und 22 zugeordnete Brenner 29 aufweist.

Aufgrund der entsprechend dem in **Figur 1** dargestellten Ausführungsbeispiel des Schachtofens 10 parallelen Anordnung einer Mehrzahl von Anodensäulen 11 bis 15 kann mit dem Schachtofen 10 eine theoretisch beliebige Anzahl von Anodensäulen in einem gemeinsamen Produktionslauf innerhalb derselben Produktionszeit hergestellt werden wie eine einzige Anodensäule, wobei mit der Erhöhung der Anodenproduktion nur ein vergleichsweise gering erhöhter Raumbedarf verbunden ist.

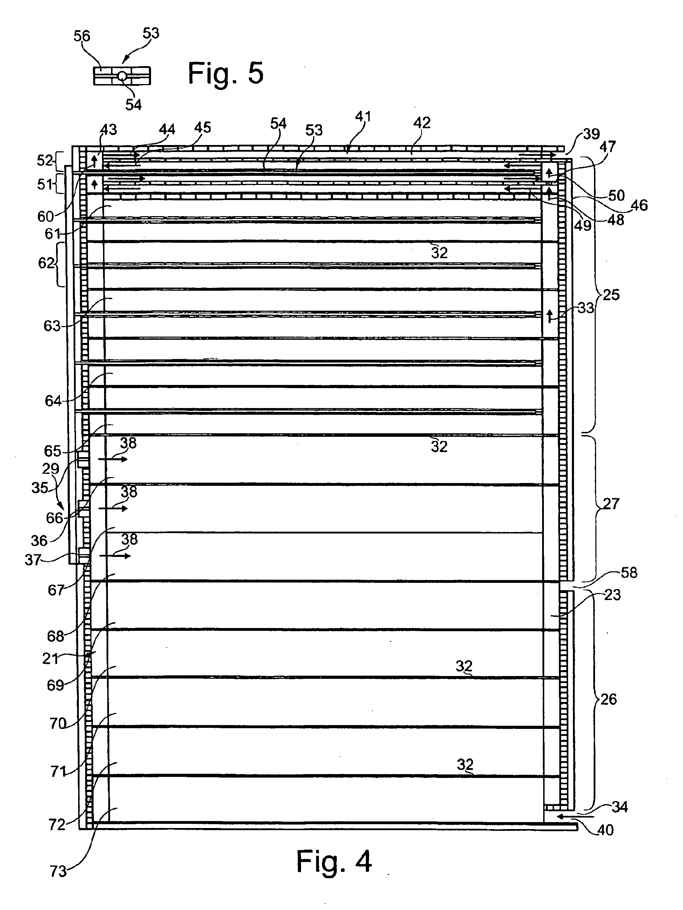

Wie **Fig. 4** anhand einer Schnittdarstellung einer Temperierschachteinrichtung 19 zeigt, ist die Temperierschachteinrichtung 19 in insgesamt 14, jeweils den Anodenreihen 16 zugeordnete Temperaturfelder 60 bis 73 aufgeteilt, die jeweils über eine Isolierschicht 32 thermisch gegeneinander isoliert sind. Die Isolierschicht 32 soll einen Temperaturausgleich zwischen den Temperaturfeldern 60 bis 73 weitestgehend verhindern und die Einstellung definierter Temperaturen einer die Temperierschachteinrichtung 19 durchströmenden Gasströmung 33 innerhalb der jeweiligen Temperaturfelder 60 bis 73 ermöglichen. Die Gasströmung 33 besteht in der unteren Abkühlzone 26 der Temperierschachteinrichtung 19 im Wesentlichen aus einer in das unterste Temperaturfeld 73 eingeleiteten Frischluft- bzw. Kühlluftströmung 34.

In der Feuerzone 27 wird über Brennerköpfe 35, 36, 37 des Brenners 29 eine Rauchgasströmung 38 eingeleitet. Wie **Fig. 4** und im übrigen auch die **Fig. 1** und 6 zeigen, erfolgt die Beaufschlagung der Temperaturfelder 66 bis 68 in der Feuerzone 27 durch die Brennereinrichtung 28 bzw. die Brennerköpfe 35, 36, 37 derart, dass sich eine im Wesentlichen parallel zu den Anodenreihen 16 ausgebildete Rauchgasströmung einstellt, die im vorliegenden Fall in Längsrichtung der Temperaturfelder 66 bis 68 ausgebildet ist. Bezogen auf Seitenflächen 75 der Anoden 17, die durch die Temperaturfelder 66 bis 68 mit Temperatur beaufschlagt werden, ergibt sich somit eine tangentiale Strömungsrichtung, die eine gleichmäßige Temperaturverteilung über die Seitenflächen 75 der Anoden 17 ohne Ausbildung von Hot Spots ermöglicht.

Die Rauchgasströmung 38 verlässt die Temperierschachteinrichtung 19 durch eine im obersten Temperaturfeld 60 der Aufheizzone 25 ausgebildete Abluftöffnung 39. Zur Ableitung der Kühlluftströmung 34 ist im obersten Temperaturfeld 69 der Abkühlzone 26 eine Abluftöffnung 58 vorgesehen.

Am Beispiel des obersten Temperaturfeldes 60 der Aufheizzone 25 ist in **Fig. 4** eine im Temperaturfeld 60 ausgebildete Kanalanordnung 41 dargestellt mit horizontal verlaufenden Kanälen 42, die an ihren Enden über als Verbindungskanäle 43 ausgebildete Umlenkeinrichtungen miteinander verbunden sind. Die Verbindungskanäle 43 befinden sich jeweils in den am Kopf und am Fuß der Anodenreihen 16 angeordneten Temperierschachteinrichtungen 21 und 23. Die horizontal ausgerichteten Kanäle 42 bewirken zusammen mit den Verbindungskanälen 43 die Ausbildung eines serpentinenartigen Strömungsweges, derart, dass Kanalströmungen 44, 45 benachbarter Kanäle 42 gegensinnig ausgerichtet sind, so dass über die Strömungsstrecke in den Kanälen 42 erfolgende Wärmeverluste der Kanalströmungen zumindest anteilig über die jeweilige Gegenströmung ausgeglichen werden, mit der Folge, dass ein resultierender Temperaturgradient in horizontaler Richtung im Temperaturfeld 60 möglichst gering gehalten werden kann.

Weiterhin ist am Beispiel des obersten Temperaturfeldes 60 der Aufheizzone 25 in einem Strömungseingangsbereich 46 des Temperaturfeldes 60 eine Bypass-Einrichtung 47 zu erkennen, die eine Aufteilung einer Eintrittsströmung 48 nach Durchströmung der strömungsdurchlässigen Isolierschicht 32 in einen ersten Strömungsanteil 49 und einen zweiten Strömungsanteil 50 bewirkt, wobei der Strömungsanteil 49 in einen strömungsaufwärts gelegenen Temperaturfeldbereich 51 und der Strömungsanteil 50 unmittelbar in einen strömungsabwärts gelegenen Temperaturfeldbereich 52 geleitet wird. Durch die unmittelbare Einleitung des aufgeheizten Strömungsanteils 50 in den strömungsabwärts gelegenen Temperaturfeldbereich 52 wird der Ausbildung eines Temperaturgradienten in vertikaler Richtung entgegengewirkt.

Andererseits kann durch eine geeignete Ausführung oder Einstellung der Bypass-Einrichtung 47bei Bedarf gezielt ein Temperaturgradient eingestellt werden.

Abweichend von dem in **Fig. 4** dargestellten horizontalen Verlauf der Kanäle 42 ist es auch möglich, die Kanäle 42 als räumlich verwinkelte Kanalstrukturen auszubilden, derart, dass die Kanäle aus dem stromaufwärts gelegenen Temperaturfeldbereich 51 anteilig im stromabwärts gelegenen Temperaturfeldbereich 52 verlaufen und umgekehrt. Bei Bedarf kann ein trotz der zwischen den Anodenreihen 16 angeordneten isolierenden Zwischenlagen 18 in den Anodensäulen 11 bis 15 ausgebildeter vertikaler Restwärmestrom dadurch kompensiert werden, dass am untersten Kanal des Temperaturfeldes die kältere Austrittsseite der Rauchgase und am obersten Kanal die heißere Eintrittsseite der Rauchgase angeordnet wird.

Im Zusammenwirken mit den die einzelnen Temperaturfelder 60 bis 73 voneinander thermisch trennenden Isolierschichten 32 wird somit die Ausbildung einer weitestgehend konstanten Temperatur in den Temperaturfeldern 60 bis 73 unterstützt.

Wie weiterhin der Darstellung des obersten Temperaturfeldes 60 der Aufheizzone 25 zu entnehmen ist, ist das Temperaturfeld 60 mit einer im Fall des vorliegenden Ausführungsbeispiels den strömungsaufwärts gelegenen Temperaturfeldbereich 51 vom strömungsabwärts gelegenen Temperaturfeldbereich 52 trennenden Absaugkanaleinrichtung 53 versehen, die eine parallel zu den Kanälen 42 verlaufenden Sammelkanal 54 und, wie in **Figur 5** dargestellt, eine Vielzahl von den Sammelkanal 54 mit einer die Anoden 17 umgebenden, mit einem mit einer Kokspackung verfüllten Entgasungsspalt 55 verbindenden Entgasungskanäle 56 aufweist.

Damit können in der Aufheizzone 25 aus den noch grünen Anoden entweichende, flüchtige Ausgasungsbestandteile über die Absaugkanaleinrichtung 53 der Brennereinrichtung 28 als Brennstoffzusatz für die Brenner 29 zugeführt werden.

Zur Erläuterung des Betriebs des in **Fig. 1** dargestellten Schachtofens 10 zeigt **Fig. 6** eine Teilschnittdarstellung des Schachtofens 10 mit jeweils zwischen Temperierschachteinrichtungen 19 angeordneten, in Förderschächten 57 zur getakteten Vorbewegung aufgenommenen Anodensäulen 11, 12. Die in einem Formgebungsverfahren hergestellten ungebrannten und daher als "grüne Anoden" bezeichnete Anoden 17 werden über eine hier nicht näher dargestellte Zuführeinrichtung in einer Aufnahmeposition 74 als oberste Anodenreihe 16 den Förderschächten 57 zugeführt, die jeweils eine Anodensäule 11, 12 aufnehmen. **Fig. 6** zeigt die in Anodenreihen 16 in den Förderschächten 57 angeordneten Anoden 17 in einer Stillstandsphase, in der sich die Anodenreihen in einer Temperierungsphase zwischen zwei Vorbewegungstakten befinden. Wie **Fig. 6** ferner deutlich erkennen lässt, sind die Anodenreihen 16 innerhalb des Schachtofens 10 jeweils zwischen thermisch isolierenden Zwischenlagen 18 angeordnet und befinden sich während der Temperierungsphase in einer seitlichen Überdeckungslage mit dem zugeordneten ebenfalls zwischen den thermisch isolierenden Zwischenlagen 32 angeordneten Temperaturfeldern 60 bis 73 der Temperierschachteinrichtungen 19. hierdurch ist sichergestellt, dass jeweils Seitenflächen 75 der Anoden 17 im wesentlichen vollständig mit der Temperatur der Temperaturfelder 60 bis 73 beaufschlagt werden. Dabei wirken die zwischen den Anodenreihen 16 angeordneten isolierenden Zwischenlagen 18 der Ausbildung eines Temperaturgradienten innerhalb der Anoden 17 als Folge der unterschiedlich temperierten Anodenreihen 16 entgegen.

Nach erfolgter Temperierung der zwischen den obersten Temperaturfeldern 60 der Temperierschachteinrichtungen 19 angeordneten Anodenreihen 16 werden diese mittels einer unterhalb jeder Anodensäule angeordneten Fördereinrichtungen 77 um einen Vorbewegungstakt nach unten zwischen die Temperaturfelder 61 der Temperierschachteinrichtungen 19 vorbewegt und durch eine Halteeinrichtung 78 in dieser Position während der Temperierungsphase gehalten. Mit jedem nachfolgenden Vorbewegungstakt bewegen sich die Anodenreihen 16 sukzessive an den weiteren Temperaturfeldern vorbei bis sie schließlich in eine Entnahmeposition 76 unterhalb des Schachtofens 10 gelangen, in der eine seitliche Entnahme der Anodenreihen 16 aus der jeweiligen Anodensäule 11, 12 erfolgt.

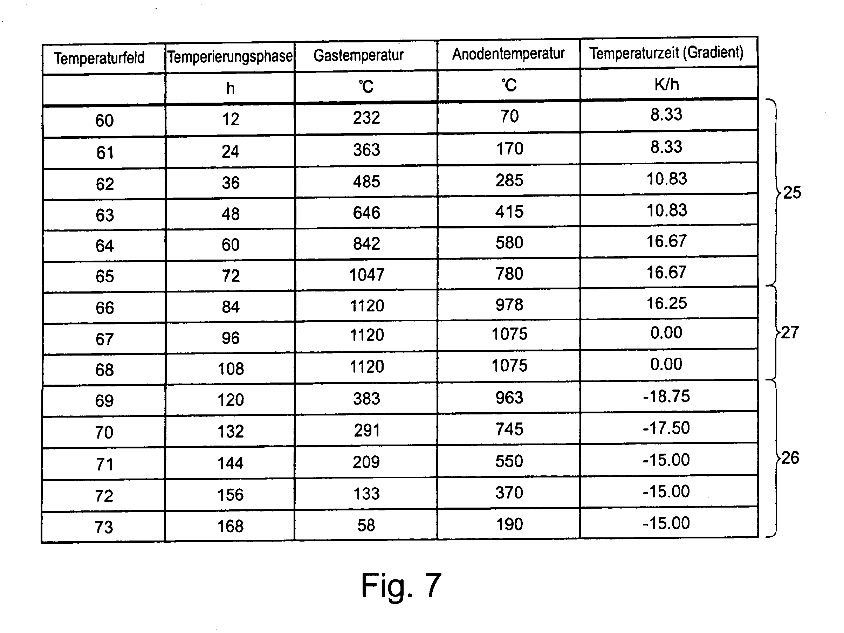

Nach jedem Fördertakt wird in der Aufnahmeposition 74 eine neue Anodenreihe 16 dem Förderschacht 57 zugeführt. Nachfolgend durchläuft jede Anodenreihe 16 das in **Figur 7** exemplarisch dargestellte Temperaturprofil, beginnend mit einer Temperaturbeaufschlagung der Anoden 17 der Anodenreihe 16 im obersten Temperaturfeld 60 über einen Zeitraum von zwölf Stunden mit einer Gastemperatur von 232°C. Dabei erreicht die grüne Anode im Temperaturfeld 60 eine Temperatur von 70°C. Unter Einhaltung der im Temperaturprofil für die einzelnen Temperaturfelder 60 bis 73 jeweils angegebenen Verweildauern wird so jede Anodenreihe 16 über die gesamte Anodensäulenhöhe von oben nach unten durch den Schachtofen 10 zwischen den mit den einzelnen Temperaturfeldern 60 bis 73 versehenen Temperierschachteinrichtungen 19, 20, 22 hindurch bewegt. Bei dem beispielhaften Temperaturprofil gemäß **Fig. 7** ergibt sich für einen Produktionslauf vorbei an den Temperaturfeldern 60 bis 73 zur Umwandlung einer grünen Anode 17 in eine fertig gebrannte Anode 17, die in der Entnahmeposition 76 (**Fig. 6**) vermittels einer hier nicht näher dargestellte Entnahmevorrichtung im Anschluß an das Temperaturfeld 73 dem Schachtofen 10 entnommen werden kann, eine Produktionszeit von 168 Stunden.

## Patentansprüche

1. Schachtofen (10) zur Wärmebehandlung von kohlenstoffhaltigen Formkörpern, insbesondere Anoden (17), mit einer Anordnung der Formkörper in einer Mehrzahl zwischen Temperierschachteinrichtungen (19, 20, 21) angeordneter Formkörpersäulen (11 bis 15), die in einem Förderschacht (57) eine Mehrzahl von übereinander angeordneten Formkörperreihen (16) aufweisen, welche ausgehend von einem Eingangstemperaturfeld (60) hin zu einem Ausgangstemperaturfeld (73) an einer Mehrzahl von Temperaturfeldern (60 bis 73) der Temperierschachteinrichtungen (19, 20, 22) vorbei bewegt werden und eine Aufheizzone (25), eine mit einer Brenliereinrichtung (28) versehene Feuerzone (27) und eine Abkühlzone (26) durchlaufen, wobei sowohl zwischen den Temperaturfeldern (60 bis 73) der Temperierschachteinrichtungen (19, 20, 22) als auch zwischen den Formkörperreihen der Formkörpersäule thermisch isolierende Zwischenlagen (32, 18) angeordnet sind.

2. Schachtofen nach Anspruch 1,
**dadurch gekennzeichnet,**
**dass** die Temperaturfelder (60 bis 73) der Temperierschachteinrichtungen (19, 20, 22) in Längsrichtung der Formkörperreihen (16) verlaufende Kanäle (42) aufweisen, die an ihren Enden zur Ausbildung einer serpentinenartig aufsteigenden Kanalanordnung (41) über Umlenkeinrichtungen (43) miteinander verbunden sind.

3. Schachtofen nach Anspruch 2,
**dadurch gekennzeichnet,**
**dass** in der Kanalanordnung (41) eines Temperaturfeldes (60 bis 73) zumindest eine den Volumenstrom in einem stromaufwärts gelegenen Temperaturfeldbereich (51) reduzierende Drosseleinrichtung vorgesehen ist.

4. Schachtofen nach Anspruch 2 oder 3,
**dadurch gekennzeichnet,**
**dass** die Kanäle (42) einen räumlich verwinkelten Verlauf aufweisen, derart, dass die Kanäle aus einem stromaufwärts gelegenen Temperaturfeldbereich (51) anteilig in einem stromabwärts gelegenen Temperaturfeldbereich (52) verlaufen und umgekehrt.

5. Schachtofen nach einem der vorangehenden Ansprüche,
**dadurch gekennzeichnet,**
**dass** im Strömungseingangsbereich (46) eines Temperaturfeldes (60 bis 73) eine zwei benachbarte Kanäle (42) unmittelbar miteinander verbindende Bypass-Einrichtung (47) vorgesehen ist.

6. Schachtofen (10) zur Wärmebehandlung von kohlenstoffhaltigen Formkörpern, insbesondere Anoden (17), mit einer Anordnung der Formkörper in einer Mehrzahl zwischen Temperierschachteinrichtungen (19, 20, 22) angeordneter Formkörpersäulen (11 bis 15), die in einem Förderschacht (57) eine Mehrzahl von übereinander angeordneten Formkörperreihen (16) aufweisten, welche ausgehend von einem Eingangstemperaturfeld (60) hin zu einem Ausgangstemperaturfeld (73) an einer Mehrzahl von Temperaturfeldern (60 bis 73) der Temperierschachteinrichtungen (19, 20, 22) vorbei bewegt werden und eine Aufheizzone (25), eine mit einer Brennereinrichtung (28) versehene Feuerzone (27) und eine Abkühlzone (26) durchlaufen, wobei der Schachtofen zur gleichzeitigen Wärmebehandlung einer Mehrzahl von Formkörpersäulen zumindest zwei Förderschächte (57) aufweist, zwischen denen eine Heizschachteinrichtung (19, 20, 22) zur gleichzeitigen Wärmebehandlung beider in den Förderschächten geförderten Formkörpersäulen angeordnet ist,
wobei in der Feuerzone angeordnete Temperaturfelder (66, 67, 68) der Temperierschachteinrichtungen mit Brennern (29) der Brennereinrichtung (28) versehen sind, die so angeordnet sind, dass eine Temperaturbeaufschlagung der Temperaturfelder tangential zu den Formkörperreihen erfolgt.

7. Schachtofen nach Anspruch 6,
**dadurch gekennzeichnet,**
**dass** die Brenner (29) derart angeordnet sind, dass die Temperaturbeaufschlagung der Temperaturfelder (66, 68, 69) in Längsrichtung der Temperaturfelder erfolgt.

8. Verfahren zur kontinuierlichen Wärmebehandlung von kohlenstoffhaltigen Formkörpern, insbesondere Anoden (17,) mit einer Anordnung der Formkörper in einer Mehrzahl zwischen Temperierschachteinrichtungen (19, 20, 22) angeordneter Formkörpersäulen (11 bis 15), die in einem Förderschacht (57) eine Mehrzahl von übereinander angeordneten Formkörperreihen (16) aufweisen, welche ausgehend von einem Eingangstemperaturfeld (60) hin zu einem Ausgangstemperaturfeld (73) an einer Mehrzahl von Temperaturfeldern (60 bis 73) der Temperierschachteinrichtungen vorbei bewegt werden und eine Aufheizzone (25), eine mit einer Brennereinrichtung (28) versehene Feuerzone (27) und eine Abkühlzone (26) durchlaufen, wobei die Wärmebehandlung von zumindest zwei Formkörpersäulen gleichzeitig erfolgt, derart, dass eine zwei Formkörpersäulen voneinander trennende Temperierschachteinrichtung zur Temperaturbeaufschlagung beider Formkörpersäulen dient,
wobei im Bereich der Feuerzone (27) angeordnete Temperaturfelder (66 bis 68) der Temperierschachtanordnungen (19, 20, 22) derart mit Brennern (29) der Brennereinrichtung beaufschlagt werden, dass sich eine im Wesentlichen parallel zu den Formkörperreihen (16) ausgebildete Rauchgasströmung (38) einstellt.

## Claims

1. A shaft furnace (10) for the heat treatment of moulded bodies containing carbon, in particular anodes (17), with an arrangement of the moulded bodies in a plurality of moulded body columns (11 to 15), which are arranged between tempering shaft devices (19, 20, 21) and which include, in a conveyor shaft (57), a plurality of moulded body rows (16), which are arranged on top of one another and which are moved past a plurality of temperature fields (60 to 73) of the tempering shaft devices (19, 20, 22) on their path from an inlet temperature field (60) to an outlet temperature field (73) and pass through a heating zone (25), a firing zone (27) that is provided with a burner device (28) and through a cooling zone (26), wherein thermally insulating intermediate layers (32, 18) are arranged between the temperature fields (60 to 73) of the tempering shaft devices (19, 20, 22), as well as between the moulded body rows of the moulded body column.

2. The shaft furnace according to claim 1,
**characterised in that**
the temperature fields (60 to 73) of the tempering shaft devices (19, 20, 22) include ducts (42), which extend in the longitudinal direction of the moulded body rows (16) and which are connected to one another on their ends by means of deflection devices (43) in order to form a duct arrangement (41) that ascends in a serpentine-like fashion.

3. The shaft furnace according to claim 2,
**characterised in that**
at least one throttle device for reducing the volumetric flow in an upstream temperature field area (51) is provided in the duct arrangement (41) of a temperature field (60 to 73).

4. The shaft furnace according to claim 2 or 3,
**characterised in that**
the ducts (42) are three-dimensionally angled in such a manner that the ducts from an upstream temperature field area (51) proportionally extend in a downstream temperature field area (52) and vice versa.

5. The shaft furnace according to any one of the preceding claims,
**characterised in that**
a bypass device (47) for directly connecting two adjacent ducts (42) to one another is provided in the flow inlet area (46) of a temperature field (60 to 73).

6. A shaft furnace (10) for the heat treatment of moulded bodies containing carbon, in particular anodes (17), with an arrangement of the moulded bodies in a plurality of moulded body columns (11 to 15), which are arranged between tempering shaft devices (19, 20, 22) and which include, in a conveyor shaft (57), a plurality of moulded body rows (16), which are arranged on top of one another and which are moved past a plurality of temperature fields (60 to 73) of the tempering shaft devices (19, 20, 22) on their path from an inlet temperature field (60) to an outlet temperature field (73) and pass through a heating zone (25), a firing zone (27) that is provided with a burner device (28) and a cooling zone (26), wherein, for the simultaneous heat treatment of a plurality of moulded body columns, the shaft furnace includes at least two conveyor shafts (57), between which a heating shaft device (19, 20, 22) for the simultaneous heat treatment of the two moulded body columns being conveyed in the conveyor shafts is arranged,
wherein temperature fields (66, 67, 68) of the tempering shaft devices that are arranged in the firing zone are provided with burners (29) of the burner device (28), which are arranged in such a way that the temperature fields are thermally acted upon tangentially to the moulded body rows.

7. The shaft furnace according to claim 6,
**characterised in that**
the burners (29) are arranged in such a manner that the temperature fields (66, 68, 69) are thermally acted upon in the longitudinal direction of the temperature fields.

8. A method for the continuous heat treatment of moulded bodies containing carbon, in particular anodes (17), with an arrangement of the moulded bodies in a plurality of moulded body columns (11 to 15), which are arranged between tempering shaft devices (19, 20, 22) and which include, in a conveyor shaft (57), a plurality of moulded body rows (16), which are arranged on top of one another and which are moved past a plurality of temperature fields (60 to 73) of the tempering shaft devices (19, 20, 22) on their path from an inlet temperature field (60) to an outlet temperature field (73) and pass through a heating zone (25), a firing zone (27) that is provided with a burner device (28) and a cooling zone (26), wherein at least two moulded body columns are simultaneously heat-treated in such a manner that one tempering shaft device separating two moulded body columns from each other serves for thermally acting upon both moulded body columns,
wherein temperature fields (66 to 68) of tempering shaft arrangements (19, 20, 22) that are arranged in the area of the firing zone (27) are acted upon with burners (29) of the burner device in such a manner that a flue gas flow (38) is generated that is essentially aligned parallel to the moulded body rows (16).

## Revendications

1. Four (10) à cuve pour le traitement thermique de pièces moulées contenant du carbone, en particulier d'anodes (17), avec une disposition des pièces moulées dans une pluralité de colonnettes (11 à 15) de pièces moulées qui sont disposées entre des dispositifs (19, 20, 21) à cuve de thermorégulation et qui présentent, dans une cuve (57) convoyeur, une pluralité de files (16) de pièces moulées qui sont disposées les unes au-dessus des autres et qui sont mues en passant devant une pluralité de champs (60 à 73) de température des dispositifs (19, 20, 22) à cuve de thermorégulation, partant d'un champ (60) de température d'entrée jusqu'à un champ (73) de température de sortie, et qui passent par une zone de réchauffement (25), une zone (27) de feu qui est dotée d'un dispositif (28) de brûleur et par une zone (26) de refroidissement, tant entre les champs (60 à 73) de température des dispositifs (19, 20, 22) à cuve de thermorégulation qu'entre les files de pièces moulées de la colonnette de pièces moulées, des couches (32, 18) intermédiaires thermiquement isolantes étant disposées.

2. Four à cuve selon la revendication 1,
**caractérisé en ce que**
les champs (60 à 73) de température des dispositifs (19, 20, 22) à cuve de thermorégulation présentent des canaux (42) qui s'étendent dans la direction longitudinale des files (16) de pièces moulées et qui sont reliés entre eux à leurs extrémités par des dispositifs (43) de déviation pour former une disposition (41) de canaux qui s'élève de type serpentine.

3. Four à cuve selon la revendication 2,
**caractérisé en ce que**
dans la disposition (41) de canaux d'un champ (60 à 73) de température, au moins un dispositif d'étranglement est prévu qui réduit le flux volumique dans une région (51) de champ de température en amont.

4. Four à cuve selon la revendication 2 ou 3,
**caractérisé en ce que**
les canaux (42) s'étendent de manière tortueuse dans l'espace, de telle manière que les canaux d'une région (51) de champ de température en amont s'étendent proportionnellement dans une région (52) de champ de température en aval et inversement.

5. Four à cuve selon l'une quelconque des revendications précédentes,
**caractérisé en ce que**
dans la région (46) de l'entrée d'écoulement d'un champ (60 à 73) de température, un dispositif (47) de dérivation est prévu qui relie deux canaux (42) adj acents l'un à l'autre directement.

6. Four (10) à cuve pour le traitement thermique de pièces moulées contenant du carbone, en particulier d'anodes (17), avec une disposition des pièces moulées dans une pluralité de colonnettes (11 à 15) de pièces moulées qui sont disposées entre des dispositifs (19, 20, 21) à cuve de thermorégulation et qui présentent, dans une cuve (57) convoyeur, une pluralité de files (16) de pièces moulées qui sont disposées les unes au-dessus des autres et qui sont mues en passant devant une pluralité de champs (60 à 73) de température des dispositifs (19, 20, 22) à cuve de thermorégulation, partant d'un champ (60) de température d'entrée jusqu'à un champ (73) de température de sortie, et qui passent par une zone de réchauffement (25), une zone (27) de feu qui est dotée d'un dispositif (28) de brûleur et par une zone (26) de refroidissement, le four à cuve présentant, pour le traitement thermique simultané d'une pluralité de colonnettes de pièces moulées, au moins deux cuves (57) convoyeur, entre lesquelles est disposé un dispositif (19, 20, 22) à cuve de chauffage pour le traitement thermique simultané des deux colonnettes de pièces moulées qui sont convoyées dans les cuves convoyeur,
des champs (66, 67, 68) de température, qui appartiennent aux dispositifs à cuve de thermorégulation et qui sont disposés dans la zone de feu, étant dotés de brûleurs (29) du dispositif (28) de brûleur, qui sont disposés de sorte que les champs de température sont dotés de la température tangentiellement par rapport aux files de pièces moulées.

7. Four à cuve selon la revendication 6,
**caractérisé en ce que**
les brûleurs (29) sont disposés de telle manière que les champs (66, 68, 69) de température sont dotés de la température dans la direction longitudinale des champs de température.

8. Procédé pour le traitement thermique continu de pièces moulées contenant du carbone, en particulier d'anodes (17), avec une disposition des pièces moulées dans une pluralité de colonnettes (11 à 15) de pièces moulées qui sont disposées entre des dispositifs (19, 20, 21) à cuve de thermorégulation et qui présentent, dans une cuve (57) convoyeur, une pluralité de files (16) de pièces moulées qui sont disposées les unes au-dessus des autres et qui sont mues en passant devant une pluralité de champs (60 à 73) de température des dispositifs (19, 20, 22) à cuve de thermorégulation, partant d'un champ (60) de température d'entrée jusqu'à un champ (73) de température de sortie, et qui passent par une zone de réchauffement (25), une zone (27) de feu qui est dotée d'un dispositif (28) de brûleur et par une zone (26) de refroidissement, au moins deux colonnettes de pièces moulées étant traités thermiquement simultanément, de telle manière qu'un dispositif à cuve de thermorégulation, qui sépare deux colonnettes de pièces moulées l'une de l'autre, sert à doter les deux colonnettes de pièces moulées de la température,
des champs (66 à 68) de température, qui appartiennent aux dispositions (19, 20, 22) à cuve de thermorégulation et qui sont disposés dans la région de la zone (27) de feu, étant dotés de brûleurs (29) du dispositif de brûleur de telle manière qu'un écoulement (38) des gaz brûlés est généré qui est conçu de manière essentiellement parallèle aux files (16) de pièces moulées.
